Europäisches Patentamt

European Patent Office

Office européen des brevets

(19)

(11) Veröffentlichungsnummer : **0 376 236 B1**

(12) # EUROPÄISCHE PATENTSCHRIFT

(45) Veröffentlichungstag der Patentschrift :
**17.03.93 Patentblatt 93/11**

(21) Anmeldenummer : **89123922.0**

(22) Anmeldetag : **27.12.89**

(51) Int. Cl.$^5$ : **C10M 107/34,** C10M 105/62,
C10M 133/08, C10M 145/32,
C10M 169/04,
// (C10M169/04, 101:02,
133:08, 145:32, 149:12),
C10N30:08

(54) **Verwendung von Addukten von 1,2-Butylenoxid an Aminen als Schmierstoffe und Schmierstoffe, diese Addukte enthaltend.**

(30) Priorität : **29.12.88 DE 3844222**

(43) Veröffentlichungstag der Anmeldung :
**04.07.90 Patentblatt 90/27**

(45) Bekanntmachung des Hinweises auf die
Patenterteilung :
**17.03.93 Patentblatt 93/11**

(84) Benannte Vertragsstaaten :
**AT BE CH DE ES FR GB IT LI NL SE**

(56) Entgegenhaltungen :
**EP-A- 0 109 515
EP-A- 0 110 003
BE-A- 651 607
US-A- 3 919 093**

(73) Patentinhaber : **BASF Aktiengesellschaft
Carl-Bosch-Strasse 38
W-6700 Ludwigshafen (DE)**

(72) Erfinder : **Oppenlaender, Knut, Dr.
Otto-Dill-Strasse 23
W-6700 Ludwigshafen (DE)**
Erfinder : **Schwen, Roland, Dr.
Im Schlossgarten 7
W-6701 Friedelsheim (DE)**
Erfinder : **Baur, Richard, Dr.
Nelkenstrasse 1
W-6704 Mutterstadt (DE)**
Erfinder : **Gousetis, Charalampos, Dr.
Carl-Bosch-Strasse 98
W-6700 Ludwigshafen (DE)**
Erfinder : **Mohr, Juergen, Dr.
Hochgewanne 48
W-6718 Gruenstadt (DE)**
Erfinder : **Mach, Helmut, Dr.
Dantestrasse 5
W-6900 Heidelberg (DE)**

EP 0 376 236 B1

**Beschreibung**

Verwendung von Addukten von 1,2-Butylenoxid an Amine als Schmierstoffe und Schmierstoffe, enthaltend diese Addukte

Die Erfindung betrifft die Verwendung von Addukten von 1,2-Butylenoxid an Amine als Schmierstoffe und Schmierstoffe, die diese Addukte enthalten.

Moderne Schmierstoffe sind nicht mehr allein durch Mineralölkomponenten herstellbar. Die Zumischung von Synthesekomponenten ist erforderlich, da ständig steigende Anforderungen an die Eigenschaften der Schmierstoffe gestellt werden.

Polyalkylenglykole auf der Basis von Ethylenoxid und/oder Propylenoxid sind seit langem als Schmierstoffe bekannt und auf dem Markt eingeführt. Polyglykole auf Basis Ethylenoxid haben jedoch als Schmiermittel eine ungenügende Kältefestigkeit. Dagegen zeigen Polyglykole, die als Mischpolymerisate auf der Basis Ethylenoxid/Propylenoxid entwickelt worden sind, ein gutes Viskositäts- und Temperaturverhalten. Die Ethylen/Propylen-Mischpolymerisate sind wie die reinen Ethylenoxidaddukte in der Regel noch wasserlöslich. Daneben sind auf dem Markt als Polyalkylenglykole noch reine Propylenoxidaddukte eingeführt. Die reinen Polypropylenglykole sind zwar nicht wasserlöslich, sie haben jedoch wie die wasserlöslichen Polyethylenglykole und Polyethylen/Propylenglykole einen entscheidenden Nachteil, daß sie mit Mineralölen in der Kälte nicht vollständig mischbar sind.

Aus der DE-A-1 444 840 sind Schmierstoffe bekannt, die Polyether und Oxalkylierungsprodukte von Alkoholen oder Ester bzw. Ether dieser Oxalkylierungsprodukte enthalten. Oxalkylierungsprodukte von Alkoholen sind jedoch in der Temperaturbeständigkeit (Alterungsverhalten) nicht ganz zufriedenstellend.

Der Erfindung liegt die Aufgabe zugrunde, Schmierstoffe zur Verfügung zu stellen, die verbesserte Tieftemperatureigenschaften sowie mit Mineralölen eine verbesserte Kälteverträglichkeit bis hin zu hohen Viskositäten aufweisen und darüber hinaus auch eine gute Alterungsbeständigkeit zeigen.

Diese Aufgabe wird gelöst durch Verwendung von Addukten von 1,2-Butylenoxid an Amine als Schmierstoffe.

Gegenstand der Erfindung ist auch ein Schmierstoff, enthaltend Addukte von 1,2-Butylenoxid an Amine.

Als Amine, die den erfindungsgemäß zu verwendenden Addukten zugrunde liegen, kommen vorzugsweise primäre und sekundäre Amine in Betracht.

Für die Herstellung der Addukte von 1,2-Butylenoxid an Amine sind z.B. primäre Amine der allgemeinen Formel $R_2$-$NH_2$ und vorzugsweise sekundäre Amine der allgemeinen Formel $R_2$-NH-$R_3$ geeignet, in denen $R_2$ und $R_3$ einen Alkylrest mit 1 bis 30, vorzugsweise 4 bis 24, insbesondere 6 bis 20 Kohlenstoffatomen bedeuten, wobei $R_2$ und $R_3$ gleich oder verschieden sein können. Geeignete Amine sind z.B. Methylamin, Dimethylamin, Ethylamin, Diethylamin, Propylamin, Dipropylamin, Butylamin, Dibutylamin, Hexylamin, Dihexylamin, Octylamin, Dioctylamin, Decylamin, Didecylamin, Laurylamin, Dilaurylamin, i-Tridecylamin, Di-i-tridecylamin, Myristylamin, Dimyristylamin, Cetylamin, Dicetylamin, Stearylamin, Distearylamin.

Die Herstellung der erfindungsgemäß zu verwendenden Addukte von 1,2-Butylenoxid an Amine erfolgt zweckmäßig in der Weise, daß ein Amin als Starter mit 1,2-Butylenoxid in Gegenwart von Alkali wie Natronlauge, Kalilauge, Natriummethylat, Kaliummethylat und anderen Alkali-Alkoxilaten wie den Natrium- oder Kalium-Alkoxilaten von aliphatischen Alkoholaten mit 2 bis 5 Kohlenstoffatomen, z.B. Natrium- oder Kalium-tert.-butylat, vorzugsweise Kalilauge bei Temperaturen von 120 bis 160°C, vorzugsweise 130 bis 150°C, insbesondere 140 bis 150°C zu den Addukten umgesetzt wird. Das Molverhältnis von 1,2-Butylenoxid zum Starter-Amin beträgt im allgemeinen 500:1 bis 1:1, vorzugsweise 400:1 bis 5:1, insbesondere 300:1 bis 10:1.

Die Addukte von 1,2-Butylenoxid an Amine können auch in der Weise erhalten werden, daß man zunächst das 1,2-Butylenoxid mit dem Amin im molaren Verhältnis von etwa 1:2 bis 1:1 bei Temperaturen von in der Regel 60 bis 160°C, vorzugsweise 100 bis 160°C in Abwesenheit von Alkali zu den entsprechenden β-Alkylaminoalkanolen bzw. ß-Dialkylaminoalkanolen umsetzt, die dann anschließend in einer zweiten Stufe mit weiterem 1,2-Butylenoxid in Gegenwart von Alkali, z.B. 0,1 bis 3 gew.%iger Natronlauge oder vorzugsweise Kalilauge, zu den Poly-1,2-butylenoxid-Addukten umgesetzt werden.

Die erfindungsgemäßen Schmierstoffe enthalten mindestens ein Addukt von 1,2-Butylenoxid an Amine. Der Schmierstoff kann auch andere Komponenten enthalten, beispielsweise übliche Komponenten, z.B. Grundöle auf Mineralölbasis oder andere synthetische Schmiermittelkomponenten, beispielsweise Poly-α-olefine. Die erfindungsgemäß zu verwendenden Addukte können einzeln oder in Mischung untereinander eingesetzt werden.

Die erfindungsgemäß zu verwendenden Schmierstoffe werden beispielsweise für Triebwerke von Kfz-Motoren, Kfz-Getriebe mit Handschaltung, automatische Getriebe oder als Industrieschmierstoffe verwendet.

Die erfindungsgemäß zu verwendenden Addukte von 1,2-Butylenoxid an Amine ergeben Schmierstoffe, die sich zusätzlich durch eine wesentlich erhöhte Thermostabilität auszeichnen.

Die Erfindung wird durch die nachstehenden Beispiele weiter erläutert.

a) Herstellungsbeispiele

1. Herstellung der Addukte von 1,2-Butylenoxid an Alkohole (Vergleich)

In einem Druckgefäß wird ein entwässertes Gemisch aus dem als Starter verwendeten Alkohol und KOH vorgelegt, wobei die eingesetzte KOH-Menge ca. 0,01 bis 1 Gew.%, vorzugsweise 0,05 bis 0,5 Gew.%, z.B. 0,1 Gew.% des zu erwartenden Gesamtgewichtes des Reaktionsproduktes beträgt. Man spült mehrmals mit Stickstoff, heizt auf 140 - 150°C und führt dann unter Rühren bei konstanter Temperatur und einem Druck zwischen 5 und 30 bar das 1,2-Butylenoxid kontinuierlich oder diskontinuierlich über Tauchrohr oder auf die Oberfläche zu, bis die gewünschte Viskosität erreicht ist. Man entfernt flüchtige Bestandteile, zweckmäßig im Vakuum, und klärt ggf. das Produkt durch Filtration.

2. Herstellung der Addukte von 1,2-Butylenoxid an Amine

In einem Druckgefäß wird das Amin als Starter zusammen mit 5 Gew.% Wasser, bezogen auf das Amin, vorgelegt. Man spült mehrmals mit Stickstoff, heizt auf 140 - 150°C und führt unter Rühren 1,2-Butylenoxid in z.B. 10 Mol-% Überschuß zu. Primäre Amine werden dabei zweifach alkoxyliert. Nach beendeter Reaktion werden im Vakuum flüchtige Bestandteile und Wasser vollständig entfernt.

Die so erhaltenen β-Aminoalkylalkohole werden anschließend, wie in Herstellungsbeispiel 1 beschrieben, mit weiterem 1,2-Butylenoxid zu den Poly-1,2-butylenoxid-Addukten umgesetzt.

3. Gemäß den Herstellungsbeispielen 1 und 2 wurden folgende 1,2-Butylenoxid-Addukte erhalten:

| Produkt | Viskosität bei | | | VI |
|---|---|---|---|---|
| | -20°C | +40°C | +100°C | |
| A 1,2-Butylenoxid an i-Tridekanol (Vergl.) | 38000 | 225 | 27 | 154 |
| B 1,2-Butylenoxid an i-Tridecylamin | 54000 | 210 | 22 | 126 |
| C 1,2-Butylenoxid an Di-i-tridecylamin | 52000 | 230 | 25 | 138 |

b) Untersuchung des Alterungsverhaltens

1. Alterungsverhalten bei 150°C unter Luft in Abwesenheit von Metall

| Produkt gemäß 3. | Versuchsdauer in Tagen | Gew.-Verlust % | Viskositäts-verlust bei | | PH nach beendetem Versuch | Flamm-punkt °C |
|---|---|---|---|---|---|---|
| | | | 40°C | 100°C | | |
| A (Vergleich) | 9 | 22 | -64% | -63% | 3 | 185 |
| B | 65 | 20 | -21% | -24% | 5 | 238 |
| C | 49 | 20 | - 6% | -17% | 4 | 248 |

2. Alterungsverhalten bei 150°C unter Luft in Gegenwart der Metalle Eisen und Kupfer

| Produkt gemäß 3. | Versuchsdauer in Tagen | Gew.- Verlust % | Viskositäts- verlust bei 40°C | 100°C | PH nach beendetem Versuch | Flamm- punkt °C |
|---|---|---|---|---|---|---|
| A (Vergleich) | 9 | 22 | -61% | -61% | 3 | 186 |
| B | 28 | 20 | -27% | -32% | 4 | 217 |
| C | 21 | 20 | -18% | -28% | 4 | 230 |

**Patentansprüche**

1. Verwendung von Addukten von 1,2-Butylenoxid an Amine als Schmierstoffe.

2. Verwendung nach Anspruch 1, dadurch gekennzeichnet, daß die Addukte als Schmierstoffkomponenten verwendet werden.

3. Verwendung nach Anspruch 1 und 2, dadurch gekennzeichnet, daß die Addukte zusammen mit einem Grundöl auf Mineralölbasis verwendet werden.

4. Verwendung nach Anspruch 1 bis 3, dadurch gekennzeichnet, daß Addukte von 1,2-Butylenoxid an primäre oder sekundäre Amine verwendet werden.

5. Schmierstoffe enthaltend Addukte von 1,2-Butylenoxid an Amine.

6. Schmierstoffe nach Anspruch 5, zusätzlich enthaltend Grundöle auf Mineralölbasis, sowie andere synthetische Schmierstoffkomponenten.

**Claims**

1. Use of an adduct of 1,2-butylene oxide with an amine as a lubricant.

2. Use as claimed in claim 1, wherein the adduct is used as a lubricant component.

3. Use as claimed in claim 1 or 2, wherein the adduct is used together with a base oil based on mineral oil.

4. Use as claimed in any of claims 1 to 3, wherein an adduct of 1,2-butylene oxide with a primary or secondary amine is used.

5. A lubricant containing an adduct of 1,2-butylene oxide with an amine.

6. A lubricant as claimed in claim 5, additionally containing a base oil based on mineral oil, and other synthetic lubricant components.

**Revendications**

1. Utilisation de produits d'addition de l'oxyde de 1,2-butylène sur des amines à titre de lubrifiants.

4

2. Utilisation selon la revendication 1, caractérisée en ce que l'on utilise les produits d'addition comme composants de lubrifiants.

3. Utilisation suivant les revendications 1 et 2, caractérisée en ce que l'on utilise les produits d'addition conjointement avec une huile de base à base d'huile minérale.

4. Utilisation suivant les revendications 1 à 3, caractérisée en ce que l'on utilise des produits d'addition de l'oxyde de 1,2-butylène sur des amines primaires ou secondaires.

5. Lubrifiants qui contiennent des produits d'addition de l'oxyde de 1,2-butylène sur des amines.

6. Lubrifiants suivant la revendication 5, caractérisés en ce qu'ils contiennent complémentairement des huiles de base à base d' huile minérale, comme aussi d'autres composants de lubrifiants synthétiques.